# EUROPEAN PATENT APPLICATION

(11) **EP 2 481 273 A1**
(43) Date of publication of application: **01.08.2012**
(21) Application number: 11152270.2
(22) Date of filing: 26.01.2011
(51) Int. Cl.: A01B 59/043, A01B 59/06

(54) **Improved top link arrangement**

(71) Applicant: Griffin, William, Co. Carlow (IE)
(72) Inventor: Griffin, William, Co. Carlow (IE)
(74) Representative: Lane, Cathal Michael

(57) **Abstract**

A top link arrangement for securing an implement to a three-point linkage comprising a frame having an upper central bracket pivotally mountable to an upper link arm of the three-point linkage, characterised in that the upper central bracket is vertically adjustable relative to the frame is described. The top link arrangement may be used in wood splitter and post driver implements or in a combined wood splitter/post driver implement.

## Description

### Field of the Invention

The invention describes an improved top link arrangement for connecting an implement to a three-point linkage. In particular, the improved top link arrangement may be used for linking an implement or machine, for example hydraulically operated machinery, to a drive source, such as an agricultural tractor. More particularly, the invention provides for use of such an improved top link arrangement in agricultural applications, including for example, use in forestry or lumbar machinery, such as in a combined wood splitter-post driver Implement.

### Background to the Invention

Conventional top link arrangements form part of a three-point linkage for securing various types of mechanical implements to drive sources which are often vehicles, such as a tractor. A three-point linkage comprises three moveable supporting arms in a triangular three-point arrangement typically with two lower arms and an upper top link. The three-point linkage ensures working attachment of the mechanical implement to the drive source such as a tractor and advantageously allows the mechanical implement to be raised and lowered relative to the drive source, to allow adjustment of a working height, for transport etc. The two lower points of the base of the triangular point arrangement are provided by two lower lifting arms for connecting to the implement of interest. The pair of lifting arms are operated by the tractor's hydraulic system and allow the attached implement to be raised and lowered as necessary. The upper central point of the triangle is provided by an upper central arm of the three-point linkage which is positioned above the lower lifting arms, at the apex of the triangular arrangement. This upper central arm is commonly known as the top link. Generally, the top link itself is not powered to provide a lifting (or lowering) action. It is not hydraulically raised or lowered by the tractor, but its length may be adjusted using suitable mechanisms such as a screw adjustment system or a hydraulic cylinder. Instead it is typically free to move so that it moves in response to lifting or lowering by the two lifting arms. Adjusting the length of the top link between the tractor and an implement alters the angle of the implement relative to the tractor. Each of the three-point linkage arms can be connected to the implement through, for example, a bracket and pin arrangement or other suitable attachment means. Three-point linkage specifications are standardized in the industry by International Organization for Standardization, ISO 730-1.

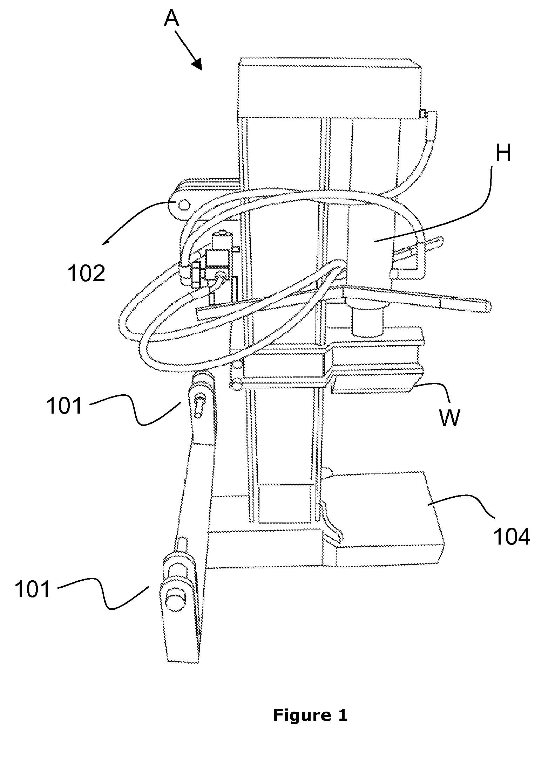

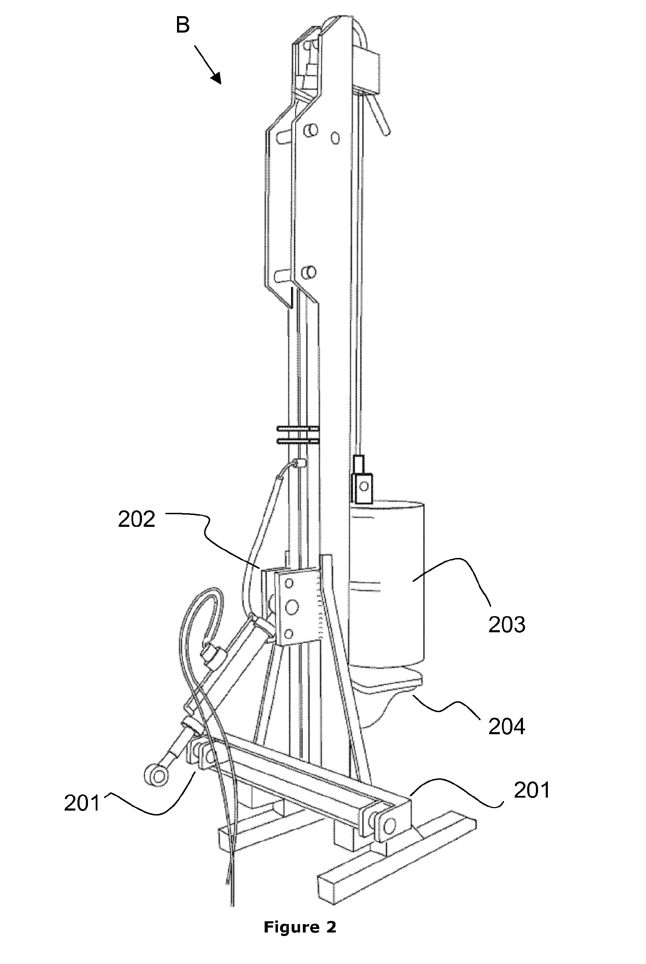

Two mechanical implements commonly used in agriculture and/or forestry include post (or pile) drivers and wood splitters, both of which are typically connected to a tractor via a three point linkage. A typical example of a wood splitter implement and a post driver implement is shown in Figure 1 and Figure 2 respectively.

Mechanical post drivers are used in fencing to set posts in the ground, quickly, accurately and securely. Mechanical post drivers can easily handle larger posts which may have to be driven into the ground as much as 1.2 metres to ensure secure positioning. The driving angle can be controlled by adjusting the implement position relative to the tractor by adjusting the length of a standard or hydraulic top link arm. Side to side tilt can be achieved by providing means for offsetting the lower lift arm mounting brackets relative to each other. Typically posts are driven into the ground in a substantially vertical manner so the tilting mechanism is often used to provide a substantially vertical driving position for a post by allowing the angle of the machine relative to the tractor to be adjusted to achieve the desired angle, for example where the tractor is on a slope the post driver may be adjusted for example by tilting to be substantially vertical.

Hydraulic wood splitters are more powerful, faster and have bigger splitting areas than electric and manual wood splitters. Vertical wood splitters are good for heavier logs that are difficult to lift. To split logs, wood is placed into an opening or cradle on the splitter and a sharp splitting wedge is driven by a hydraulic cylinder into the log with sufficient force to split the log into pieces.

Some prior art agricultural implements may be fitted with various tool attachments to function as a wood splitter or post driver depending on the tool fitted to the implement. However, separate tool attachments may easily be lost and storage space is needed for the tool attachment when not in use or when in transit. Furthermore, tool attachment changeover can be time consuming or require use of special tools, leading to loss of efficiency.

Prior art includes devices such as those disclosed in United States Patent No. 4,869,002 which describes a digging device for use on small vehicles, for example, pickup trucks, and which is operable by a hydraulic pump mounted under the hood of the truck. The device mounts to the frame of the vehicle and has separate tool attachments for operations such a post driving and wood splitting.

United States Patent No. 5,645,179 describes a multiple implement equipment boom which allows a plurality of working implements of different configurations to be used with a single vehicle. The multiple implement equipment boom has a boom body with at least one telescoping shaft with a hollow outer beam and an inner beam slidably fitting within the outer beam, and a connecting link with a receiving box that slidably fits over one end of the inner beam and a locking mechanism to secure the receiving box to the inner beam. The working implements, which include a post driver and a wood splitter can be exchanged by hand without tools and without removing the boom from the vehicle.

Notwithstanding the state of the art, there remains a need for a single machine that has stand alone post driver and wood splitter dual functionality in a single device without requiring interchange of parts of the machine, for example removing a driver or fitting a blade. Such a combined wood splitter-post driver implement would be more efficient and more time saving than existing separate devices. Such an improved implement could be carried simultaneously by a tractor thereby reducing the need for return trips to the yard, for example. Desirably, the implement should be multidirectional and capable of setting a post to a specific slope or gradient allowing for maximum precision in the fencing operation as well as having the ability of splitting wood.

The improved top link arrangement of the present invention allows for such a combined wood splitter-post driver implement.

### Summary of the Invention

Accordingly, in one aspect the present invention provides a top link arrangement for securing an implement to a three-point linkage of a drive source such as a tractor comprising:
a frame having an upper central bracket pivotally mountable to an upper link arm of the three-point linkage,
characterised in that the upper central bracket is vertically adjustable relative to the frame.

This means that the upper central bracket may move vertically up or down relative to the frame position.

The top link arrangement of the invention can thus be used for securing an implement to the standard three-point linkage of a tractor or the like.

The top link arrangement is preferably used in implements such as a post driver or wood splitter or in combined post driver/wood splitter implements.

Suitably, the frame further comprises a pair of lower brackets pivotally mountable to the lifting arms of a three-point linkage and wherein the lower brackets points form the corner points of the base of a triangular arrangement. The top link arrangement bracket point forms the apex point of this triangular arrangement.

By "points" it is meant the position of the end of the three-point linkage arms furthest away from the tractor or in the case of the present invention, the spatial position of the brackets.

The "triangle configuration" of such top link arrangements is well known to the skilled person, as nowadays tractor top linkages conform to International Standard ISO 730-1. Suitably, the frame further comprises a pair of lower brackets pivotally mountable to the lifting arms of a three-point linkage and wherein the lower brackets points form the corner points of the base of a triangular arrangement. And the top link arrangement bracket point forms the apex point of this triangular arrangement.

By "vertically adjustable", it is meant that vertical position or vertical height of the upper central bracket may be adjusted upwards or downwards relative to the stationary frame. Preferably, the range of vertical adjustment of the upper central bracket from the frame position is from about 0.2 metres to about 0.6metres. However, the skilled person will appreciate that implements of larger construction will inherently have larger vertical adjustment ranges.

The triangular point arrangement or configuration arises from the visual appearance of the spatial arrangement of the points of the three-point linkage when the tractor is viewed from the rear. The ends of the linkage arms are visible as points to the observer and adopt a triangular point arrangement or configuration. Thus, the points of the two lower brackets form the corner points of the base of a triangle, whereas the upper central bracket point forms the apex point of the triangle. Prior art top link arrangement comprise three rigid linking bracket points, which are fixed relative to each other. In other words, the geometry of the triangle point arrangement of the prior art brackets never changes, as the bracket points are set at a fixed distance from each other. In the case of the top link arrangement of the present invention, the vertical position (or height) of the upper central bracket can be vertically adjusted relative to the position of the implement frame onto which the lower and upper brackets are mounted.

An implement comprising a frame, rather than a solid main body (which is often used in prior art implements), is preferable since the gaps in the frame provide a viewing area to allow the operator an unobstructed view from the tractor cab. The preferred frame of the invention is not a solid body, as the view of the working areas is often obstructed in implements having a solid main body.

The top link arrangement of the invention can be advantageously used in agricultural or forestry implements, in particular, however the top link arrangement of the invention is not limited to such use.

Thus in one aspect, the top link arrangement of the invention comprises:
a frame having on at least one face,
a pair of lower brackets pivotally mountable to the lifting arms of a three point linkage, and
an upper central bracket pivotally mountable to the upper link arm of a three-point linkage,
wherein the bracket points form the corner points of the base and apex point of a triangular arrangement,
wherein the upper central bracket is vertically adjustable relative to the frame.

In one desirable arrangement, the pair of lower brackets and upper central bracket are on each face of the frame. In other words, a second pair of lower brackets and upper central bracket is provided on the opposite side of the frame. Such a second pair of lower brackets and upper central bracket provided on the opposite side (both front and rear faces of the frame) to the first pair of lower brackets and upper central bracket means that the implement may be mounted in reverse.

Thus in one embodiment, there is provided an implement comprising
a frame having on at least one face,
a pair of lower brackets pivotally mountable to the lifting arms of a three point linkage, and
an upper central bracket pivotally mountable to the upper link arm of a three-point linkage wherein the brackets points form the corner points of the base and apex point of a triangular arrangement,
characterised in that the upper central bracket is vertically adjustable relative to the frame. Such an arrangement can be used in a wood splitter implement.

In a related aspect, the top link arrangement of the invention comprises:
a frame having on each face,
a pair of lower brackets pivotally mountable to the lifting arms of a three point linkage, and
an upper central bracket pivotally mountable to the upper link arm of a three-point linkage,
wherein the bracket points form the corner points of the base and apex point of a triangular arrangement,
characterised in that at least one of the upper central bracket is vertically adjustable relative to the frame.

Vertical adjustment of the position or height of the upper central bracket position relative to the frame, has the effect that (when the frame is mounted onto a three-point linkage of a tractor) the geometry of the triangle arrangement of the brackets point position changes as the vertical position of the upper central bracket is adjusted. In other words, when the height of the upper central bracket relative to the pair of lower lifting arm brackets is changed, the size and shape of the triangle arrangement changes accordingly. The advantage of this top link arrangement is that vertical adjustment of the position (or height) of the upper central bracket relative to the frame (and consequently, relative to the pair of lower brackets) forces the frame to tilt forward or backwards from its normal position. "normal position" means that the upper central bracket is in a location in which the frame is in a perpendicular plane to the plane that bisects the points of which the drive source wheels contact the ground (for example, the position it adopts (typically substantially vertical) when the tractor is on a horizontal surface). So the adjustment of the tilt angle can be achieved by sliding movement of the upper central bracket relative to the frame. Sliding movement of the bracket can be achieved within an adjustment range by any suitable means for example a piston and cylinder arrangement such as a hydraulic cylinder. The hydraulic cylinder is important as it functions in one implement configuration to tilt the frame forward and backward relative to the tractor, while in the other implement configuration, the hydraulic cylinder operates as the drive mechanism, in this example, to provide the wood splitting force.

Suitably, the frame may comprise a frame stabilizing means for contacting the frame to the ground. Preferably, the frame stabilizing means comprises at least one foot. At least one projecting foot, for maintaining the implement in an upright position when not mounted onto the tractor is desirable. Desirably, the implement according may further comprise a hammer support extending upwards vertically from the frame. This facilitates use in implements such as a post or pile driver. Preferably, the frame further comprises a post gripping means, preferably in the form of gripping members such as clamping feet or gripping feet or gripping rollers. This is an advantageous arrangement since it means that the post to be driven is gripped securely during the driving operation. This allows for more accurate post setting and makes the implement safer to use.

Thus there is provided an implement comprising:
a hammer support extending upwards from a frame, the frame having on each face,
a pair of lower brackets pivotally mountable to the lifting arms of a three point linkage, and
an upper central bracket pivotally mountable to the upper link arm of a three point linkage,
wherein the bracket points form the corner points of the base and apex point of a triangular arrangement,
wherein the upper central bracket is vertically adjustable relative to the frame.

Preferably, the upper central bracket provided on a hammer which is mounted on the frame on the hammer support.

In certain preferred embodiments, the hammer support further comprises an anvil plate for contacting with a hammer. This is useful since it allows transfer of the force of the falling hammer to strike the anvil plate.

Preferably, the hammer is provided with a linking means to connect the anvil plate to the hammer, so that if desired, the hammer and anvil plate may move along the hammer support together. Suitable linking means include a chain.

When a post location is chosen, the post can be held upright by the operator and both hammer and anvil plate can drop together to gently press the post into the ground into an initial position. The anvil plate can then be detached from the hammer and can be used to hold the post in position. The hammer can then drop with full force onto the anvil plate covering the head of the post. This action can then be repeated until the post is fully driven into the desired position. For safety, the hammer can be lowered at two speeds (i) very slowly for gently pressing the post into position and then (ii) faster wherein the hammer is dropped at full force for driving the post securely into the ground. For safety a mechanical linkage means both the operators hands are needed to drop the hammer at full force. The anvil plate advantageously holds the post in position, prevents damage to the post and ensures the strike force is evenly distributed. Preferably, the anvil plate is covered with a layer of rubber or other material, which preferable reduces noise and wear resulting from the hammer striking the anvil plate.

Desirably, the anvil plate is vertically adjustable along the hammer support. This conveniently allows the post driver implement to be used with posts of various lengths.

The hammer can be supported at the top of the hammer support by a rope attached to a rope pulling means. Suitably, the rope pulling means is provided on the hammer support and may take the form of a hydraulic cylinder. In a preferred embodiment, the hydraulic cylinder can be accommodated within a cavity provided in the hammer support. To assist in the rope travel, the hammer support may further comprise a pulley mechanism at the top of the support. The skilled person will appreciate that the rope can be substituted by a belt, cable or a chain or the like.

In one embodiment, the frame may further comprise means for tilting the frame orientation from side to side. This is particularly useful in a post driver implement where control of post tilt directions is of great importance. Suitably, the means for tilting the frame orientation may comprise, for example, a moveable sleeve onto which at least one lower bracket may be mounted. In a preferred embodiment, the sleeve may be vertically slidable along one side of the frame. Suitably, the sleeve may take a form such that it can be mounted or clipped around a side section of the frame. When the sleeve (to which a lower lift arm bracket is attached) moves vertically along a side of the frame, that particular side of the frame is raised or lowered relative to the starting position, depending on the extent of sleeve movement. Since the frame itself is rigid, such vertical sliding movement forces the frame to move up or down relative to the stationary lift arms of the tractor three point linkage. In other words, since it is mounted on the tractor, the sliding movement of the sleeve forces one side of the frame to move up and down, depending on the direction of the sleeve sliding motion. Since, the lift arms of a tractor three point linkage is set and held by the tractor the effect is that the frame itself moves up and down to give side to side tilt control of the frame.

Suitably, for an embodiment where a hammer support is used, the upper central bracket may be positioned on the hammer support. In particularly preferred embodiments, the hydraulic cylinder is positioned above the upper central bracket.

In a particularly preferred arrangement the hydraulically operated vertically adjustable upper central bracket arrangement functions as a wood splitter implement. The implement is switched from the post driver working position to the wood-splitting working position by reversing (the orientation of) the mounting of the implement. The implement desirably has two opposed mounting positions for a tractor so that the implement can be flipped around between the two positions to achieve either the post driver or wood splitting functionality as desired. The lower lift brackets on the frame on the hammer side of the implement are used to connect the implement to the lower parts of the tractor three-point linkage, whereas the vertically adjustable top link arrangement may be advantageously incorporated into the post driver hammer which rests on the anvil plate at a position on the vertical hammer support that corresponds with the top link arm of the tractor three-point linkage. A mechanical safety locking mechanism is used to lock the hammer in this position to stop the hammer being raised accidentally. Advantageously, a tool attachment may then be attached beneath the vertically adjustable upper central bracket and the hydraulically vertical adjustment movement may be used for various operations such as wood splitting, metal bending, pressing, log clamping etc, depending on the tool attachment used.

Thus, in another aspect, there is provided a kit of parts comprising a set of tool attachments having at least one tool attachment selected from the group consisting of: a straight wedge, a cross wedge, a press, and a clamp. These tool attachments provide scope for the implement to be used as a wood splitter, a press break for metal forming, a hydraulic press and a log jaw.

Suitably, in a preferred embodiment, the hammer is adapted to drop from the top of the support, vertically along one face of the frame. In such an embodiment, the upper central bracket is located or positioned on the frame face (side of the frame) not having the hammer and the upper central bracket is vertically adjustable relative to the frame. For example, in the log splitting configuration, the upper central bracket may be positioned on the hammer as described above.

In a related aspect there is provided an implement comprising:
a hammer support extending vertically upwards from a frame, the hammer being adapted to drop from the top of the support vertically along one face of the frame, the frame having on each face
a pair of lower brackets pivotally mountable to the lifting arms of a three point linkage, and
an upper central bracket pivotally mountable to the upper link arm of the three point linkage, wherein the brackets are positioned at the base and apex of a triangular arrangement,
characterised in that the upper central bracket on the frame face not having the hammer is vertically adjustable relative to the frame.

In this particular arrangement, the implement may be suitably used as a combined post driver-wood splitter implement. In the post driver configuration the implement is attached to the tractor three-point linkage by the brackets positioned on the side of the implement having the vertically adjustable upper central bracket (that is, on the side not having the hammer). In the wood splitter configuration, the implement orientation is reversed, and is attached to the tractor through the brackets provided on the side of the implement having the hammer.

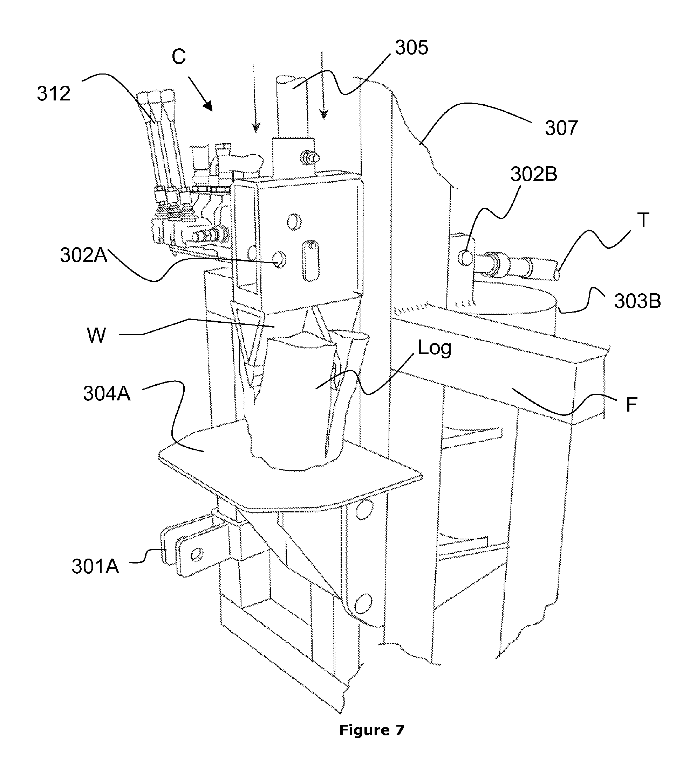

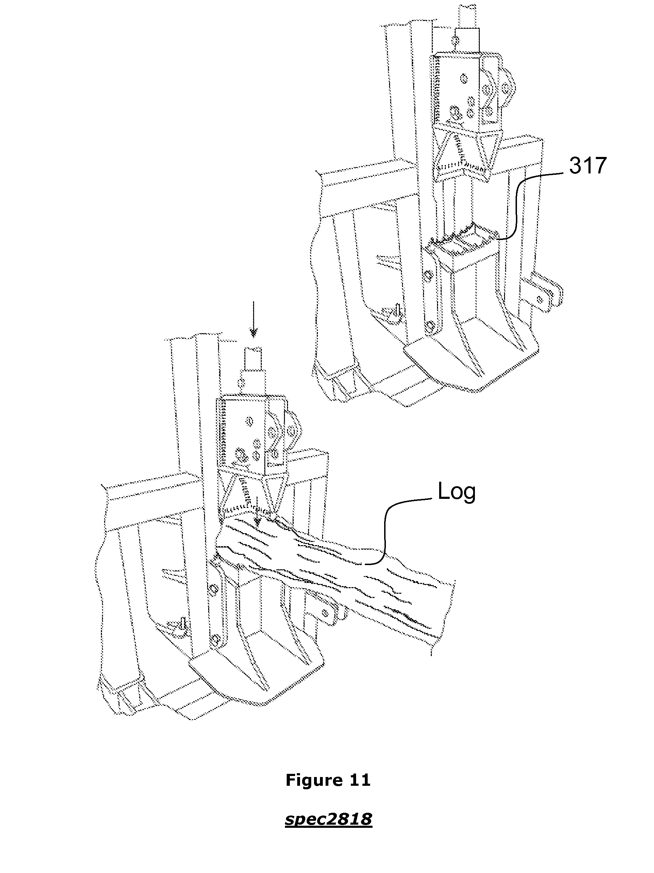

For many applications, it is preferable that the frame or the hammer support of the implement of the invention further comprises a log support positioned underneath the tool attachment. Suitably, the log support may adopt the form of a flat table or shelf area. Advantageously, it may be concave shaped so that a log may be supported thereon, on its round side. This is a reversible part. The flat table used for wood splitting (figure 7) can be reattached upside down so that the concave cradle/jaw is facing towards the upper central bracket (see Figure 11)

Advantageously, the device of the present invention provides for an improved working environment since it is not required to return to a yard etc., to collect and fit a different implement, rather the orientation of the implement on the tractor is simply reversed.

Furthermore, it is not necessary to remove and attach different working heads for post driving and log splitting configurations. Advantageously, this obviates the need for extra storage for additional implements, i.e., post driver, wood splitter, log jaw and press.

### Brief Description of the Drawings

Additional features and advantages of the present invention are described in, and will be apparent from, the detailed description of the invention and from the drawings in which:

**Figure 1** illustrates a side perspective view of a prior art wood splitter implement;

**Figure 2** illustrates a rear side perspective view of a prior art post driver implement;

**Figure 3** illustrates a rear side perspective view of a combined post driver-wood splitter implement according to the present invention;

**Figure 4** illustrates a side elevation view of combined post driver-wood splitter implement according to the present invention, wherein the dashed lines represent tilt angle positions;

**Figure 5** illustrates a rear side perspective view a combined post driver-wood splitter implement mounted onto a tractor;

**Figure 6** illustrates side elevation views of a combined post driver-wood splitter implement in a backward (A) and forward (B) tilt position;

**Figure 7** illustrates front side perspective view of a section of the combined implement shown in Figure 6 in the log splitting operation using the cross wedge;

**Figure 8** illustrates a rear side view of the vertically adjustable top link arrangement;

**Figure 9** illustrates views of a number of additional tool arrangements (as well as Figure 7: wood splitter & Figure 11: log grabber) suitable for use with the implement of the invention ((i) & (ii) hydraulic presses; (iii) press brake for light steel; and (iv) straight wedge;

**Figure 10** illustrates the pulley system of the present invention; and

**Figure 11** illustrates a log grab tool of the present invention.

### Detailed Description of the Invention

It should be readily apparent to one of ordinary skill in the art that the examples disclosed herein represent generalised examples only, and that other arrangements capable of reproducing the invention are possible and are embraced by the present invention. Various combinations of features of aspects and preferred embodiments are interchangeable to give various feature combinations which are not explicitly disclosed herein.

**Figure 1** provides a view of a prior art wood splitter A in which the pair of lower lift arm brackets for connecting to a tractor three-pint linkage are designed with reference numeral 101, and the upper central bracket 102 for connecting to the top link of a three-point linkage. The prior art device also comprises a chopping wedge W, connected to hydraulic cylinder H and a log support plate 104 onto which the hydraulic cylinder H impacts. It should be said, that for safety reasons, the wedge does not surface to surface impact the plate as a gap of 5-10mm remains where the wedge rests slightly over the plate.

**Figure 2** provides a view of a prior art post driver B in which the pair of lower lift arm brackets for connecting to a three-pint linkage are designed with reference numeral 201, and the upper central bracket 202 for connecting to the top link of a tractor three-point linkage. Post driving hammer 203 is shown resting over anvil plate 204. This view also shows a hydraulic top link, which is used to connect the upper central bracket 202 to the tractor.

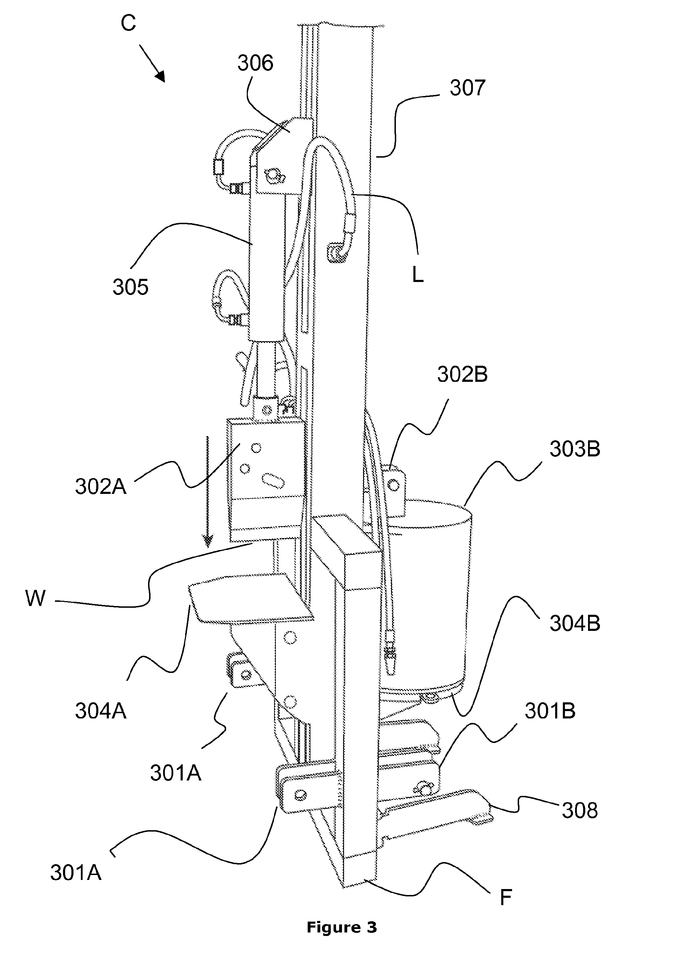

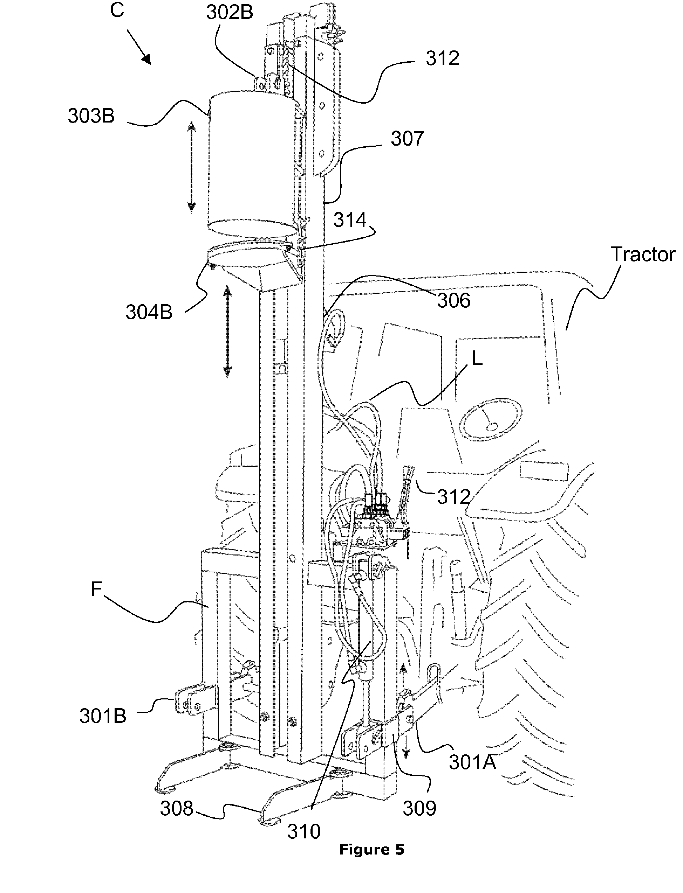

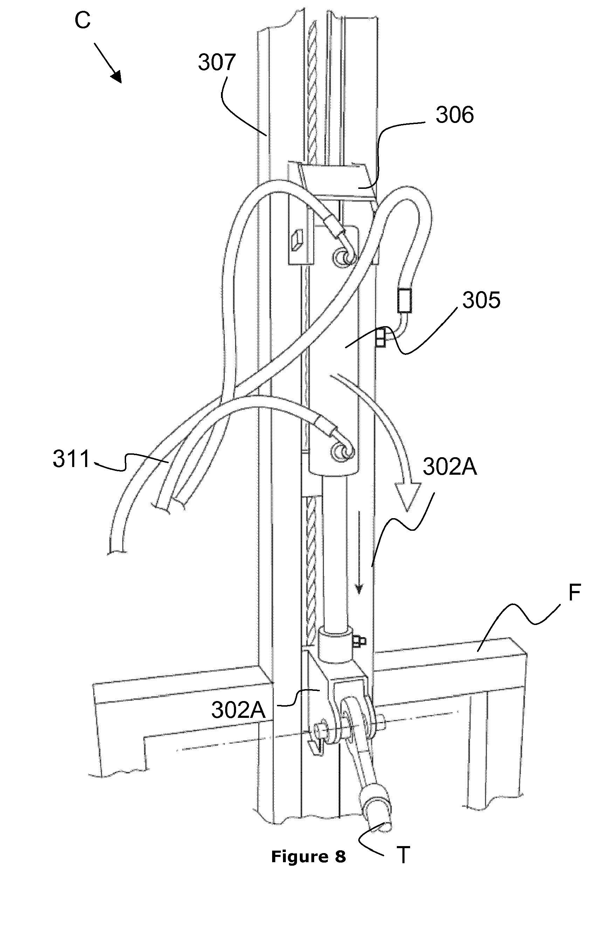

**Figure 3** shows the lower part of a preferred embodiment of the invention wherein post driver-wood splitter functionality is combined into a single post driver-wood splitter implement C. The pair of lower lift arm brackets for connecting the post driver to the tractor three-point linkage arms L (implement in post driver configuration) are designated with reference numeral 301A, and the upper central bracket 302A for connecting to the top link T of a tractor three-point linkage; The pair of lower lift arm brackets for connecting the wood splitter to the tractor three-point linkage (in the wood splitter configuration) are designed with reference numeral 301B, and the upper central bracket 302B for connecting to the top link of a tractor three-point linkage. While upper central bracket 302B may move, frame F tilting is not required when the implement is in the wood splitter configuration. In common with prior art, the implement of the invention comprises post-driving hammer 303 which is shown resting over post positioning anvil plate 304B. The post positioning anvil plate 304B is linked to the hammer 303 by a chain 314 (shown in **Figure 5**). Thus, the post positioning anvil plate 304B moves together with the hammer 303 as the chain 314 attaches the post positioning anvil plate to the hammer 303. In the embodiment shown, upper central bracket 302B (when implement orientated in wood splitter configuration) located at the top of the hammer 303B functions as the upper central top link arrangement for the wood splitter configuration of the implement of the invention. The lower lift arm brackets 301B extend outwards from each side edge of frame F. **Figure 3** also shows a hydraulic cylinder 305 which is mounted onto hammer support 307 which extends vertically upwards from frame F by a bracket 306 at the upper end of the hydraulic cylinder 305 and to the upper central bracket 302A (which can move vertically relative to the frame F), to which log splitting wedge W (straight wedge in this example) may also be attached. In this embodiment, the upper central bracket 302A can be vertically adjusted downwards and upwards when the inner cylinder of hydraulic cylinder 305 is extended or retracted respectively. When a log splitting wedge W is fixed the wedge W may drop onto log support plate 304A when the hydraulic cylinder 305 is extended and may be raised away from the log support plate 304A when the hydraulic cylinder 305 is contracted. The hydraulic cylinder 305 functions in one implement configuration to tilt the frame forward and backward relative to the tractor, while in the other implement configuration, the hydraulic cylinder operates as the drive mechanism, in this example, provide the wood splitting force. When the implement is orientated in the post driving configuration, the upper central bracket 302A adjusted into a desired position relative to the frame (see **Figure 8**) to facilitate frame F tilting described in more detail later. A number of hydraulic lines L for linking to the tractor hydraulic driver are shown also. As in the embodiment shown in **Figure 3****,** the wood splitter wedge W and the upper central bracket 302A are conveniently formed as a single piece tool attachment. The arrow highlights the direction of force produced by hydraulic cylinder 305 towards log support plate 304A. A pair of stabilizing legs 308 extend outwards from the bottom of frame F and assist in maintain the implement in an upright position when not in use.

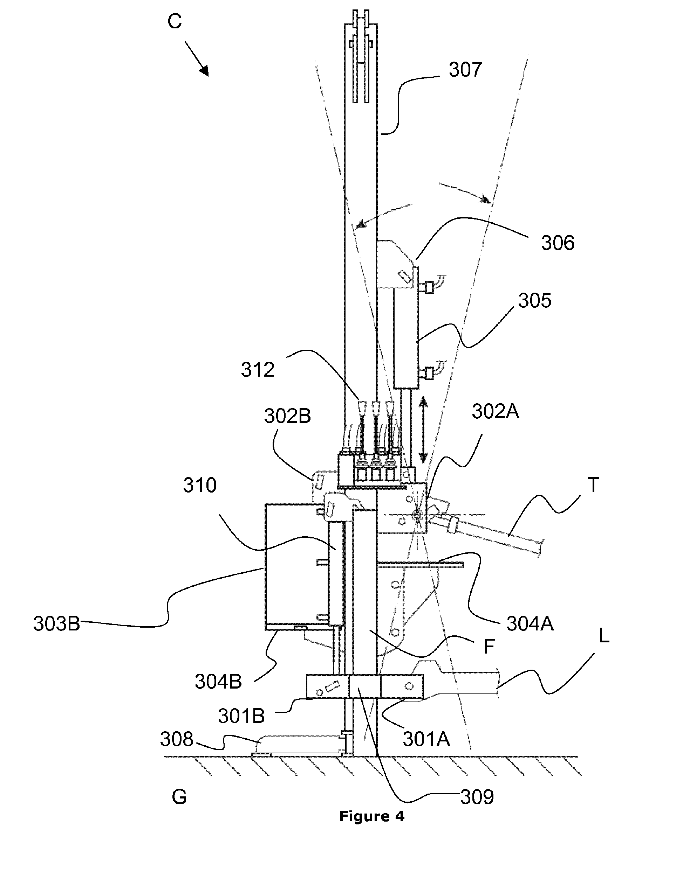

**Figure 4** shows a preferred embodiment of the invention in which a post driver-wood splitter is attached onto a tractor (not shown) three-point linkage in the post driving configuration is positioned with the bottom of frame F and stabilizing legs on the ground G, ready for operation. The dashed lines represent the forward and back tilt operating angles into which the implement can be moved by theaction of hydraulic cylinder 305 relative to the bracket 306, which causes the upper central bracket 302A to move vertically relative to the frame F, having the effect that the frame F is tilted. This gives the user control of the post position and drive angle. The figure shows clearly the lower lift arm bracket 301A attachment to the lower lift arm of the tractor three-point linkage. This figure shows slidable sleeve 309 surrounding the side edge of frame F. The lower lift brackets 301A, 301B are attached to sleeve 309, or indeed are formed together with the sleeve 309 to form a single component. Hydraulic cylinder 310 for side-to-side tilt movement is mounted onto the top of frame F by a bracket 311 and connected at the other end to lower lift brackets 301A and sleeve 309. Sleeve 309 may slide upwards and downwards along the frame edge by action of the hydraulic cylinder 310. Operating levers 312 for controlling the various hydraulic components of the implement are also shown in this figure.

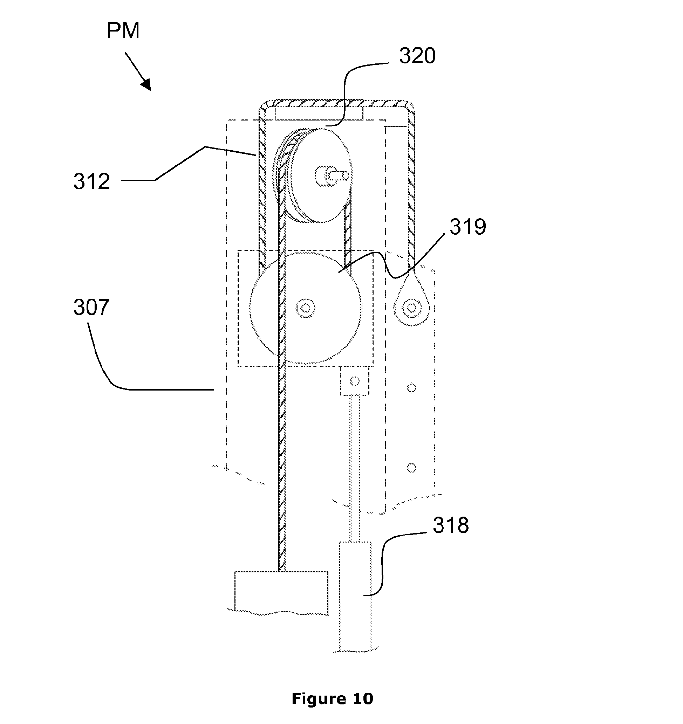

**Figure 5** shows a preferred embodiment of the invention attached onto the tractor in the post driving configuration. In this Figure, the hammer 303B and anvil plate position 304B have been adjusted to accommodate longer posts. The anvil plate 304B is linked to the hammer 303 by a chain 314. Thus, the anvil plate 304B moves together with the hammer 303B while chain 314 is attached to hammer 303. Rope 312 connects hammer 303B at one end to a pulley mechanism PM (Figure 10) located within the hammer support 307 (not shown in **Figure 10**) for raising and lowering the hammer 303 (shown in **Figure 11**).

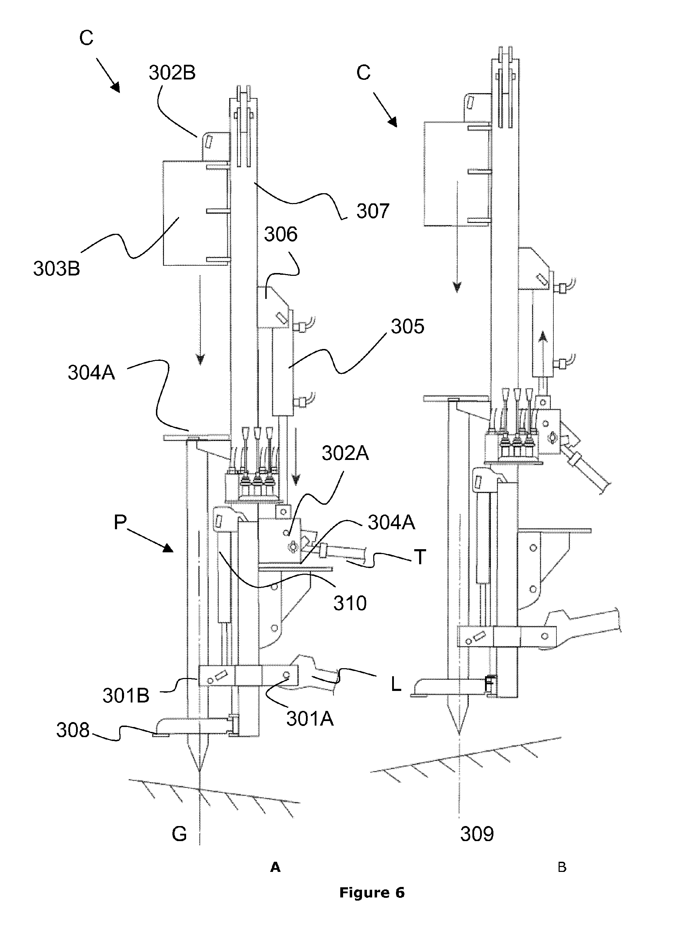

In use, the implement is attached to the three-point linkage of a tractor (**Figure 5**) and transported to the location where the post P is to be driven. The implement is lowered from the transport position so that the bottom of frame F and stabilizing legs 308 are positioned on the ground (**Figure 4**). If the post P needs to be driven at an angle, the operator can tilt the post driver implement frame forward or backwards relative to the tractor (to the positions shown in **Figures 4** and **6**) by raising or lowering the hydraulic cylinder 305 relative to upper central bracket 302A positioned on the upper portion of frame F (see **Figure 6**). If side-to-side tilt is required to position the post P correctly, then sleeve 309 position along frame F edge may be adjusted by action of hydraulic cylinder 310 causing frame F to tilt from side to side. When the post driver is positioned correctly, the post P to be driven is then held initially in the desired position by an operator. The hammer 303B and anvil plate304B are then raised upwards along the hammer support 307 using the hydraulically operated pulley mechanism (Figure 10). At first, the hammer 303B and anvil plate 304B, linked by chain 314, are gently lowered onto the post P (**see** **Figure 5**) until the post P is gently secured in the ground. The operator then unlinks the chain 314 linking the anvil plate 304B to hammer 303B so that the anvil plate rests over the top of the post (**Figure 6**). A small spike on the under side of the anvil plate 304B further acts to secure the post. The hammer 303B is then raised to the highest position on the hammer support 307 by activating the hydraulically operated pulley mechanism (Figure 10). The hammer 303B is then released and drops to meet the anvil plate 304b under a force sufficient to drive the post P into the ground. The action is repeated until the post is positioned in the ground at the desired depth. Anvil plate 304B is then reattached using chain 314 and the hammer 303B is raised until the anvil plate 304B is no longer in contact with the post. The tractor can then be driven forward from this position and the implement lifted for transportation to the next position.

**Figure 7** illustrates the wood splitting embodiment of the invention where a log is placed on log support plate 304A. In this example, the wedge W is a cross wedge is driven into the log where it is split in four pieces. The arrows indicate the direction of movement of the hydraulic cylinder 305 to produce a downward force need to split the log.

**Figure 8** illustrates a view of the hydraulic cylinder 305 which is fixed at one end to upper central bracket 302A, which in this example is mounted in an adjustable position relative to frame F. Top link T of a tractor is pivotally mounted onto the upper central bracket 302A. The arrows indicate the direction in which the hydraulic cylinder 305 actuates to adjust the vertical position of the upper central bracket 302A relative to the frame F. The movement of the upper central bracket 302A relative to the frame (produced by hydraulic cylinder 305), forces the frame F into pivotal movement about axis represented by the broken line running through the pivot point as shown in the figure. Movement of the hydraulic cylinder 305 adjusts the upper central bracket 302A vertical position relative to the frame F and forces tilting movement of the implement about the pivot axis. When the hydraulic cylinder is extended, the upper central bracket 302A reverts to the original position to tilt the frame F back to the initial position.

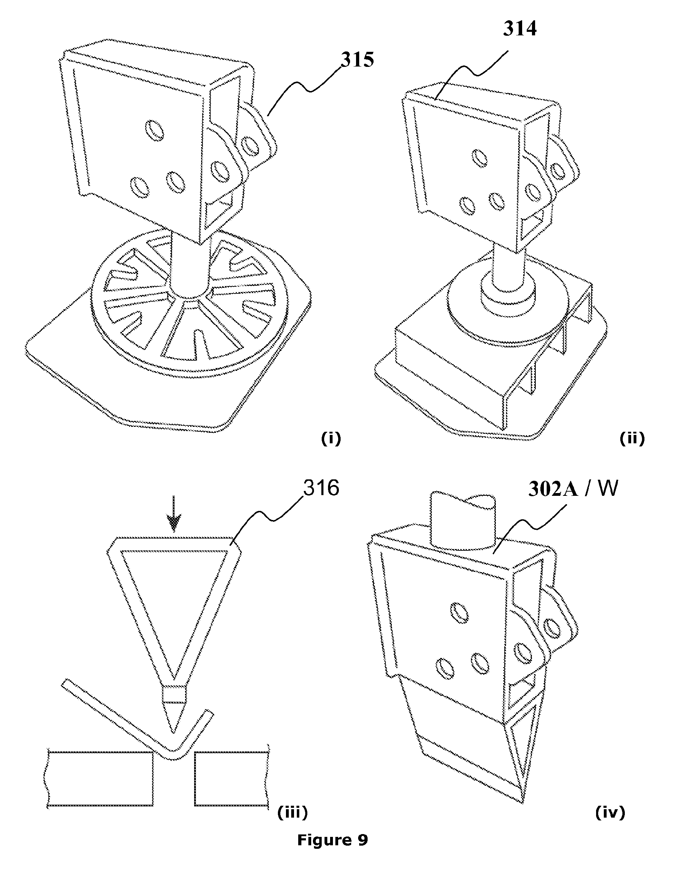

**Figure 9** illustrates views of a number of additional tool arrangements suitable for use with the implement of the invention ((i) hydraulic press 315 & (ii) hydraulic press 314; (iii) press brake 316 for forming metal; and (iv) straight wedge W.

**Figure 10** illustrates the pulley mechanism PM located within a cavity provided within hammer support 307 (not shown). The pulley mechanism PM comprises a hydraulic cylinder 318 which is mounted within the lower end of the hammer support 307 where it is stationary as it is fixed at its lower end. Onto the upper end of the hydraulic cylinder 318 there is mounted a moveable lower pulley 319, the vertical position of which is vertically moveable by action of the hydraulic cylinder 318. When the hydraulic cylinder 318 inside the hammer support 307 (not shown) of the machine is contracted, lower pulley 319 is pulled along a rail system (not shown) away from the upper pulley 320, which is mounted in a stationary position above lower pulley 319. The two pulleys 319, 320 when used together in this manner act as a gearing system so that for, in this example, every 1 meter the hydraulic cylinder moves, it uses 2 metres of rope from the pulley mechanism PM, thus raising the hammer 303B (not shown) 2 metres.

**Figure 11** illustrates the log grabber tool 317 fitted to the implement of the invention. This tool allows a log to be grabbed in a secure position between the serrated log grabber and cross wedge W by the implement of the invention.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A top link arrangement for securing an implement to a three-point linkage of a drive source comprising
a frame having an upper central bracket pivotally mountable to an upper link arm of the three-point linkage,
**characterised in that** the upper central bracket is vertically adjustable relative to the frame.

2. The top link arrangement of Claim 1 wherein the frame further comprises a pair of lower brackets pivotally mountable to lower lifting arms of a three-point linkage of the drive source.

3. An implement comprising
a frame having on at least one face,
a pair of lower brackets pivotally mountable to the lifting arms of a three point linkage of a drive source, and
an upper central bracket pivotally mountable to the upper link arm of a three-point linkage
**characterised in that** the upper central bracket is vertically adjustable relative to the frame.

4. The implement according to Claim 3 further comprising a hammer support extending upwards vertically from the frame.

5. The implement of Claim 3 or Claim 4 wherein a second pair of lower brackets and upper central bracket are provided on the opposite sides of the frame so that the implement may be mounted in reverse.

6. The implement of Claim 4 or Claim 5 wherein the hammer is adapted to drop from the top of the support vertically along one face of the frame and wherein the upper central bracket on the frame face not having the hammer is vertically adjustable relative to the frame.

7. The top link arrangement of Claims 1 or 2 or the implement of any one of Claims 3 to 6 wherein the upper central bracket is vertically adjustable relative to the frame by a hydraulic cylinder which functions in one implement configuration to tilt the frame forward and backward relative to the tractor, while in the other implement configuration, the hydraulic cylinder operates as the drive mechanism.

8. The implement of Claim 7 wherein the upper central bracket is positioned on the hammer support or positioned on the hammer.

9. The implement of Claim 7 or Claim 8 wherein the hydraulic cylinder is positioned above or below the upper central bracket.

10. The top link arrangement of Claim 1 or Claim 2 or the implement of any one of Claims 3 to 9 wherein the frame further comprising means for tilting the frame orientation from side to side.

11. The top link arrangement or the implement of Claim 10 wherein the means for tilting comprises a moveable sleeve onto which at least one lower bracket is mounted.

12. The implement of any one of Claims 4 to 11 wherein the hammer support further comprises an anvil plate for contacting with the hammer and the anvil plate is vertically adjustable along the hammer support.

13. The implement of Claim 4 or Claim 12 wherein the hammer is supported at the top of the hammer support by rope connected to a pulley mechanism, wherein a rope pulling means is connected to the pulley mechanism, such as a rope pulling means is an adjustable hydraulic cylinder, wherein the adjustable hydraulic cylinder is provided within the hammer support and the hammer support further comprises a pulley at the top of the hammer support.

14. An implement comprising the top link arrangement of any one of Claims 1, 2, 8, or 13.

15. The implement according to Claim 14 wherein the implement is a post driver, a wood splitter or a combined post driver-wood splitter.
